(19) Europäisches Patentamt
European Patent Office
Office européen des brevets

(11) **EP 2 464 126 A1**

(12) **EUROPEAN PATENT APPLICATION**

(43) Date of publication:
**13.06.2012 Bulletin 2012/24**

(51) Int Cl.:
***H04N 13/00*** *(2006.01)*

(21) Application number: **10194636.6**

(22) Date of filing: **10.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Advanced Digital Broadcast S.A.**
**1292 Chambesy (CH)**

(72) Inventors:
• **Hrebien, Maciej**
 **65-119, Poland (PL)**

• **Lazarski, Wojciech**
 **65-119, Poland (PL)**
• **Kobzda, Piotr**
 **65-119, Poland (PL)**

(74) Representative: **Pawlowski, Adam**
 **Eupatent.PL**
 **Al. Kosciuszki 23/25**
 **90-418 Lodz (PL)**

(54) **A system and a method for transforming a 3D video sequence to a 2D video sequence**

(57) A method for transforming a 3D video sequence comprising pairs of original stereo frames (110, 120) to a 2D video sequence comprising mono frames (150), he method comprising the steps of determining a number of transition frames and for each consecutive transition frame mixing an original first frame (110A-110E) of the stereo pair with an original second frame (120A-120E) of the stereo pair using a transition function to obtain a transition frame (130A-130E), wherein the transition function is based on a transition coefficient changing for consecutive frames, such that the first (130A) of the transition frames is substantially equal to the original second frame (120A) and the last (130E) of the transition frames is substantially equal to the original first frame (110E) and providing the original first frame (110A-110E) and the transition frame (130A-130E) as a transition stereo pair.

Fig. 4

EP 2 464 126 A1

**Description**

The present invention relates to transforming a 3D (three-dimensional) video sequence to a 2D (two-dimensional) video sequence.

It is common to display 3D video by displaying video frames for the left eye and the right eye of the viewer in an alternate order, wherein the viewer uses shutter glasses correlated with the display of video frames. Such 3D systems can be also used to display 2D video by doubling the display frequency and displaying a single 2D frame both for the left eye and the right eye of the user.

A typical 3D video display system of the aforementioned type is described in a US patent US5796373, which discloses a computerized stereoscopic image system comprising LCD shutter glasses, a VGA card for generating an analog RGB signal, a monitor for displaying the analog RGB signal and a shutter synchronizer, the synchronizer receiving a signal from the VGA card and generating a signal driving the shutter glasses. Similar systems are commonly employed in television sets.

In hybrid 2D/3D video systems, the displayed video may comprise a mix of 2D and 3D scenes. For example, a 2D on-screen-display OSD (comprising e.g. television program guide data or advertising data) may be overlaid on the 3D video. In some cases, simultaneous display of 2D and 3D signal may require discarding the third dimension, i.e. by displaying only one of the stereoscopic frames of the 3D signal.

In other situations, two 3D video sequences may have to be displayed on top of each other, for example a 3D OSD on top of a 3D movie. In order to limit interferences between the sequences, one sequence, for example the movie, may be transformed to a 2D sequence.

The transition between a 3D sequence and 2D sequence can be easily performed by simply displaying one of the frames of the stereo pair in place of the other pair, such that e.g. the left frame is provided both as the left-eye frame and the right-eye frame. However, simply discarding display of one of the frames of the stereo pair results in a flicker, is noticeable and unpleasant to the user.

The aim of the present invention is to provide a method for transition from a 3D video sequence to a 2D video sequence which is not abrupt.

The object of the present invention is a method for transforming a 3D video sequence comprising pairs of original stereo frames to a 2D video sequence comprising mono frames, the method comprising the steps of determining a number of transition frames and for each consecutive transition frame mixing an original first frame of the stereo pair with an original second frame of the stereo pair using a transition function to obtain a transition frame, wherein the transition function is based on a transition coefficient changing for consecutive frames, such that the first of the transition frames is substantially equal to the original second frame and the last of the transition frames is substantially equal to the original first frame and providing the original first frame and the transition frame as a transition stereo pair.

The transition function may define a summation of the left frame multiplied by a first transition coefficient and of the right frame multiplied by a second transition coefficient, wherein the sum of the first and second transition coefficient is constant for consecutive transition frames.

The first and second transition coefficients may change in a non-linear fashion for consecutive transition frames.

The transition function can be an attractor function configured to output, for each pixel of the frame, a transition pixel equal to a pixel of a second frame which is most similar to a pixel of the first frame within a range equal to the transition coefficient.

The number of transition frames may define a transition length of between 0,3 second and 2 seconds.

The method may further comprise the steps of, for each consecutive transition frame, mixing the original first frame of the stereo pair with the original second frame of the stereo pair using a secondary transition function to obtain a secondary transition frame, wherein the transition function is based on a secondary transition coefficient changing for consecutive frames and not larger than the transition coefficient, such that the first of the secondary transition frames is substantially equal to the original first frame and the last of the transition frames is substantially equal to the original first frame and providing the secondary transition frame and the transition frame as the transition stereo pair.

The method may further comprise the steps of determining a number of re-transition frames, for each consecutive re-transition frame, mixing an original first frame of the stereo pair with an original second frame of the stereo pair using a re-transition function to obtain a re-transition frame, wherein the re-transition function is based on a re-transition coefficient changing for consecutive frames, such that the first of the re-transition frames is substantially equal to the original first frame and the last of the re-transition frames is substantially equal to the original second frame and providing the original first frame and the re-transition frame as a re-transition stereo pair.

The object of the present invention is also a computer program comprising program code means for performing all the steps of the method according to the invention when said program is run on a computer, as well as a computer readable medium storing computer-executable instructions performing all the steps of the method according to the invention.

Another object of the invention is a system for transforming a 3D video sequence comprising pairs of original stereo frames to a 2D video sequence comprising mono frames, the system comprising a frame decomposer configured to receive the 3D video sequence and decompose it into an original first frame and original second frame, a counter configured to count a number of transition frames, a mixer configured to, for each consecutive transition frame, mix the original first frame with the original second frame using a transition function to obtain a transition frame, wherein the transition function is based on a transition coefficient changing for consecutive frames, such that the first of the transition frames is substantially equal to the original second frame and the last of the transition frames is substantially equal to the original first frame, and a frame composer configured to provide the original first frame and the transition frame as a transition stereo pair.

The system may further comprise a mixer, configured to, for each consecutive transition frame, mix the original first frame of the stereo pair with the original second frame of the stereo pair using a secondary transition function to obtain a secondary transition frame, wherein the transition function is based on a secondary transition coefficient changing for consecutive frames and not larger than the transition coefficient, such that the first of the secondary transition frames is substantially equal to the original first frame and the last of the transition frames is substantially equal to the original first frame, wherein the frame composer is configured to provide the secondary transition frame and the transition frame as the transition stereo pair.

The invention is shown by means of exemplary embodiment on a drawing, in which:

Figs. 1A-1F show a transition from a 3D video sequence to a 2D video sequence according to one embodiment of the invention.
Figs. 1G-1K show a re-transition from a 2D video sequence to a 3D video sequence.
Fig. 2 shows the steps of one embodiment of the method according to the invention.
Figs. 3A-3C show a transition from a 3D video sequence to a 2D video sequence according to another embodiment of the invention.
Fig. 4 shows a structure of a first embodiment of a system according to the invention.
Figs. 5A-5B show a primary transition coefficient and a secondary transition coefficient.
Figs. 6A-6F show a transition from a 3D video sequence to a 2D video sequence according to another embodiment of the invention.
Fig. 7 shows the steps of another embodiment of the method according to the invention.
Fig. 8 shows a structure of a second embodiment of a system according to the invention.

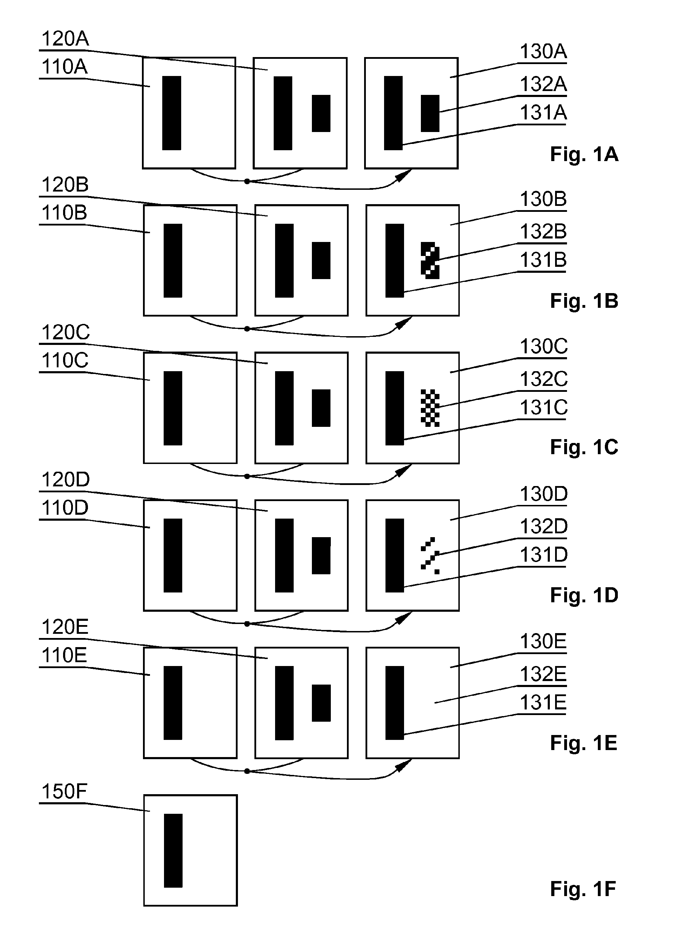

Figs. 1A-1F show a transition from a 3D video sequence to a 2D video sequence according to the invention. The 3D video sequence is a sequence of pairs of original stereo frames, comprising first frames 110 to be viewed e.g. by the left eye of the user and second frames 120 to be viewed e.g. by the right eye of the user. The frames 110, 120 may be transmitted in the 3D video stream in different formats, for example as alternating frames or may be contained in a single LR (left-right), a TB (top-bottom) frame or an interlaced frame, containing images of the left-eye frame and the right-eye frame in one stereo frame. In the example provided, the transition is performed for a transition length equal to five transition frames.

In consecutive steps of the transition procedure, the consecutive original first frames 110A-110E are mixed with the consecutive original second frames 120A-120E to obtain transition frames 130A-130E.

The mixing is performed using a transition function based on a transition coefficient changing for consecutive frames, such that the first 130A of the transition frames is substantially equal to the original second frame 120A and the last 130E of the transition frames is substantially equal to the original first frame 110E.

After obtaining a transition frame 130A-130E, the original first frame 110A-110E and the transition frame 130A-130E are provided as a transition stereo pair to be displayed to the user. After obtaining the last transition frame, which is equal to the original first frame, only the first frame can be duplicated as a mono frame 150F to create a 2D video signal, by displaying the original first frame 150F for both eyes of the user.

Therefore, the contents of the third dimension, for example the contents 132A-132E specific for the second frame 120, e.g. the right-eye frame, diminish gradually in the consecutive transition frames 130A-130E, while the contents 131A-131E common for both original frames 110, 120 are constant. Therefore, the user loses the perception of the third dimension gradually. Therefore, the transition is abrupt and the visionary perception of the user may adapt to a change from a 3D scene to a 2D scene.

The transition procedure can be initiated upon receiving an activation request, e.g. when a 2D OSD is to be displayed. Furthermore, an initiating tag can be transmitted in the 3D video sequence specifying an upcoming point of the end of the sequence, in order to start transforming the 3D sequence to a 2D sequence before the end of the 3D sequence. The transition procedure can be also initiated when a user wishes to change the video input signal, e.g. to switch from a 3D video channel in a television system to a 2D video channel — in such a case the operation of channel switching may be delayed until the 3D video is smoothly transformed to a 2D video. Moreover, an opposite algorithm may be used to restore the third dimension of the 3D scene, for example after displaying of a 2D or 3D OSD over the original transformed scene has ended, by bringing in the third dimension, i.e. the contents of the original second frame.

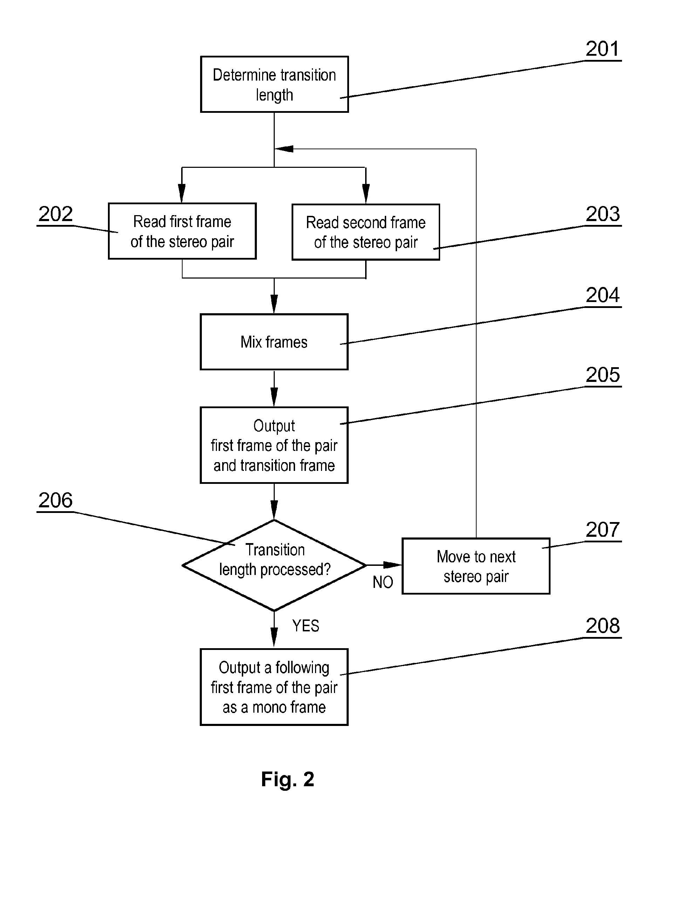

Fig. 2 shows the steps of the method according to the invention. In step 201, a transition length is determined as a number of transition frames. The transition length may be a predetermined number or a number configured by the user, such as 10, 15 or 30 frames (corresponding, for a 30 frames per second stream, to transition time equal to 0.33 second, 0.5 second, 1 second). Preferably, a transition length of 1 second is used, as it is not perceived as abrupt and the user does not perceive blurring of the third dimension. Next, in steps 202 and 203, the original first 110A-110E and the original second 120A-120E frame of the original stereo pair are read. In step 204 the read original frames are mixed using a transition function to obtain a transition frame 130A-130E. In step 205 the original first frame 110A-110E and the transition frame 130A-130E are provided to output as a transition stereo pair. The transition function is based on a transition coefficient changing for consecutive frames, such that the first 130A of the transition frames is substantially equal to the original second frame 120A and the last 130E of the transition frames is substantially equal to the original first frame. In step 206 it is checked whether all the frames of the whole transition length have been processed. If not, the procedure moves to the next stereo pair to be processed. If yes, the transition is finished and the transition frame of the transition stereo pair is substantially equal to the first original frame. Then, in step 208, only the next first frame of the original stereo pair is provided to output as a mono frame forming a 2D video signal.

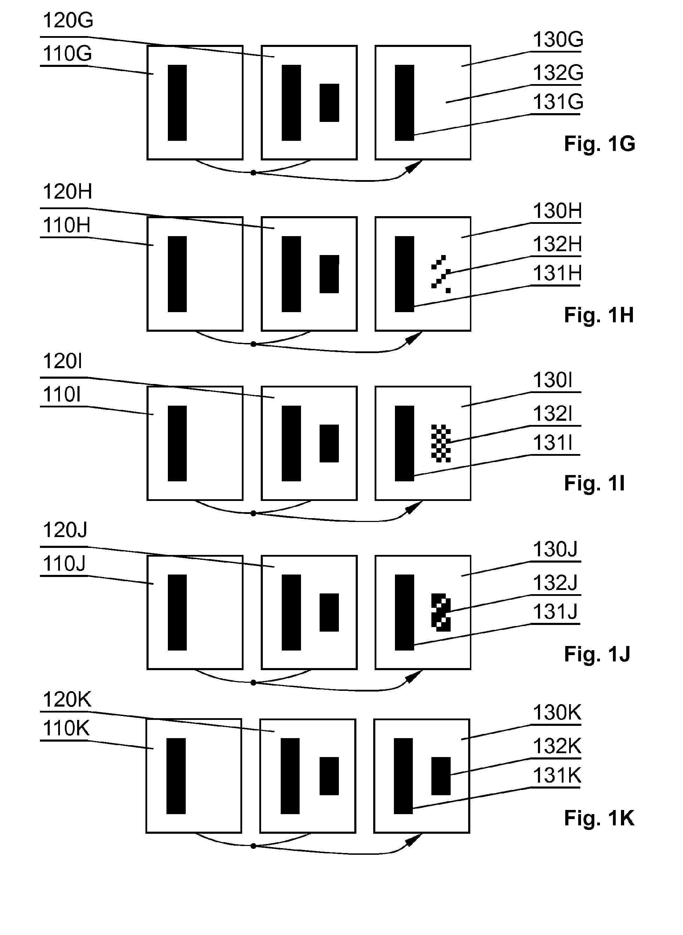

An equivalent method can be used to perform re-transition from a 2D sequence comprising only the original first frames to a 3D sequence comprising the original first and second frames. An exemplary result of such method is shown in Figs. 1G-1K. The number of re-transition frames is determined. Next, for each consecutive re-transition frame, the original first frame 110G-110K is mixed with the original second frame 120G-120K using a re-transition function to obtain a re-transition frame 130G-130K. The re-transition function is based on a re-transition coefficient changing for consecutive frames, such that the first 130G of the re-transition frames is substantially equal to the original first frame 120G and the last 130K of the re-transition frames is substantially equal to the original second frame 110K. The original first frame 110G-110K and the re-transition frame 130G-130K are provided as a re-transition stereo pair. After all re-transition frames have been displayed, the original first and second frames can be displayed subsequently.

An exemplary transition function can be defined as:

$$\tilde{R}_i = \alpha_i L_i + (1 - \alpha_i) R_i,$$

where

$$\alpha_i = \sin\frac{i\pi}{2\Omega},$$

and

$$i = 0, 1, 2, \dots, \Omega.$$

$\tilde{R}_i$ is the transition frame (in the present example, the right frame)

$L_i$ is the first original frame of the stereo pair (in the present example, the left frame)

$R_i$ is the second original frame of the stereo pair (in the present example, the right frame)

$\alpha_i$ is a transition coefficient for i-th transition frame

i is the number of the processed transition frame

$\Omega$ is the total number of transition frames

By basing the transition coefficient on a sinus function, the transition results in a faster blend in the first transition frames and a more gentle blend in the final transition frames. For re-transition procedure, the transition coefficient can be based on a cosines function. Other transition coefficients can be used as well, such as exponential or linear functions.

The transition function can also utilize an attractor based technique. Each source pixel at the first original frame of the stereo pair attracts with an arbitrary given strength pixels present on the second original frame of the stereo pair. Pixels that are the most similar to the source one in a given attraction area are preferred over other pixels, as well as those that are closer. The most attracted pixel is chosen as the result and placed at a suitable position in the transition frame. The pixels can be compared only in horizontal direction, the vertical parallax is not taken into account, as it usually does not change between the left and right eye.

for $\theta \le \Omega$:

V pixels in $L_\theta$, indexed using (i, j) notation:

$$\tilde{R}_\theta(i,j) = R_\theta(i, j + \delta(k)),$$

$$k = arg \min_{\delta} (D(L_\theta(i,j), R_\theta(i, j + \delta))),$$

$$\delta = 0, -1, 1, -2, 2, \ldots, -\theta, \theta,$$

for $\theta > \Omega$:

$$\tilde{R}_\theta = L_\theta$$

where:

$$D(a,b) = (a_R - b_R)^2 + (a_G - b_G)^2 + (a_B - b_B)^2.$$

$\tilde{R}_\theta$ is the calculated new right/bottom side of a video frame,

$L_\theta$ is the left/top side of a video frame,

$R_\theta$ is the right/bottom side of a video frame,

D is the distance function (sum of squared differences in the given case),

$k$ is the index of the pixel being *attracted,*

$\theta$ is the current *attraction* strength,

$\Omega$ is the maximal *attraction* strength,

$X_R$, $X_G$, $X_B$ are *red, green* and *blue* pixel components respectively

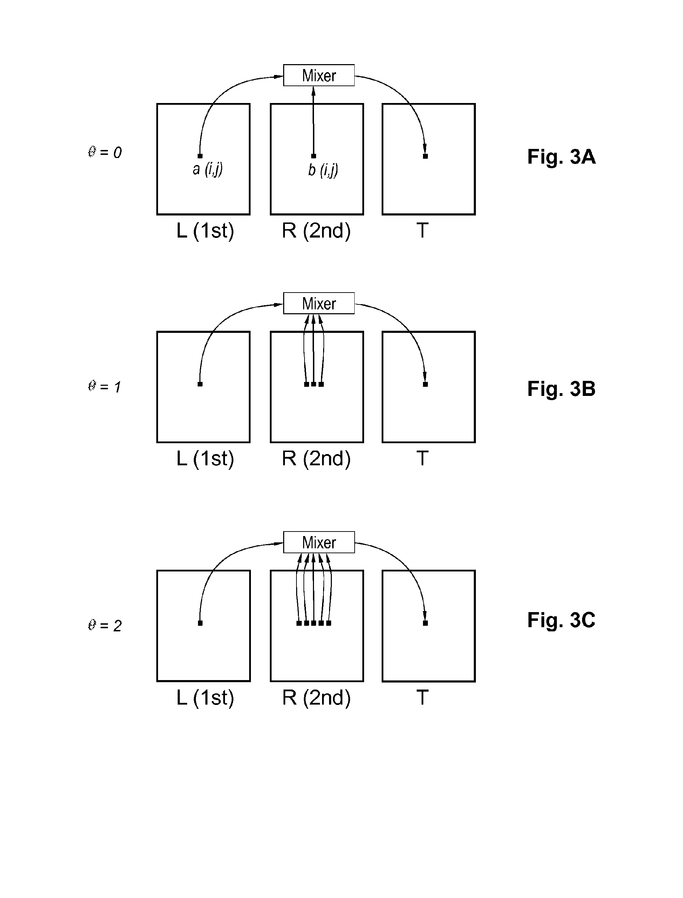

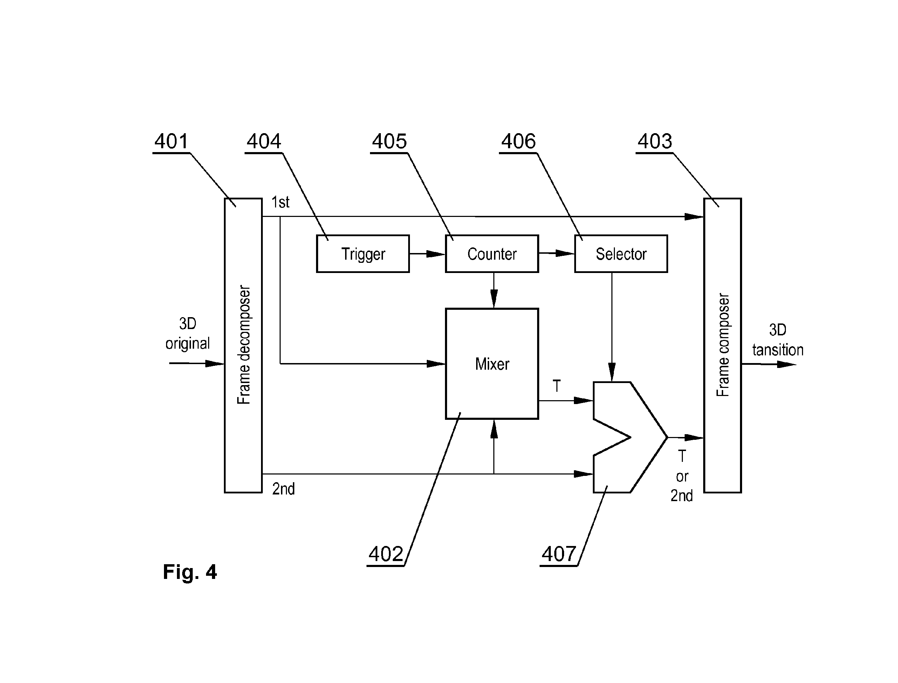

The concept of the above algorithm is shown on Figs. 3A-3C for three consecutive frames ($\Omega$=3). For the first stereoscopic frame shown in Fig. 3A, the attraction strength $\theta$ is zero, therefore pixels of the right frame R (or the second frame) are directly copied to the transition frame T. For the second stereoscopic frame shown in Fig. 3B, the attraction strength $\theta$ is 1 and pixels of the right frame R (or the second frame) $b_{i,j}$ $b_{i-1}$, *and* $b_{i+1}$ are compared with the pixel $a_{i,j}$ of the left frame L (or the first frame), and the pixel most similar to the pixel $a_{i,j}$ of the left frame is copied to the transition frame T at coordinates of the the pixel $a_{i,j}$ of the left frame. For the third stereoscopic frame shown in Fig. 3C, the attraction strength $\theta$ is 2 and pixels of the right frame R $b_{i,j}$, $b_{i-1}$ $b_{i-2}$, $b_{i+1}$, *and* $b_{i+2}$ are compared with the pixel $a_{i,j}$ of the left frame L, and the pixel most similar to the pixel $a_{i,j}$ of the left frame is copied to the transition frame T at coordinates of the the pixel $a_{i,j}$ of the left frame. The comparison is made by a mixer circuit, as explained with reference to Fig. 4, wherein the mixer circuit in this case functions as a best match selector.

Fig. 4 shows the structure of a first embodiment of a system according to the invention. A 3D frame decomposer 401 is configured to receive a 3D original video sequence comprising pairs of original stereo first (110A-110E) and second (120A-120E) frames and to split the pair frames into individual frames to facilitate individual frames processing by a mixer 402. The decomposer 401 may be configured to read consecutive frames and to provide them in parallel to the mixer 402 in case the frames are transmitted in alternate order. In case the pair of frames is transmitted in a single frame, the decomposer 401 may be configured to detect the type of the frame and to extract the contents of the first and second frames of the pair and to provide them to the mixer. The mixer 402 is configured to mix the original first frame 110A-110E with the original second frame 120A-120E of the stereo pair using the transition function and to output a transition frame 130A-130E. A 3D frame composer 403 is configured to receive the original first frame 110A-110E and the second original frame 120A-120E or the transition frame 130A-130E and to combine them into an output 3D transition signal. A trigger 404 is used to initiate operation of the mixer 402 by starting a counter 405 which provides a parametric input to the mixer 402, specifying a number from 0 to N (wherein N specifies the number of transition frames) as well as controls the selector 406 which drives a switch 407. If the value of counter is greater than zero, i.e. the process of transformation is ongoing, the switch 407 is configured to provide a transition frame to the frame composer. If the value of the counter is zero, i.e. the process of transformation has not started or has been cleared, the switch is configured to provide a right frame (i.e. the second original frame) to the frame composer. When the process of transformation is finished, the value of counter can be kept at N in order to provide a transition frame, which corresponds to the first original frame, at the output of the switch 407, in order for the 3D signal output from the frame composer to correspond to a 2D signal having only the first original frames.

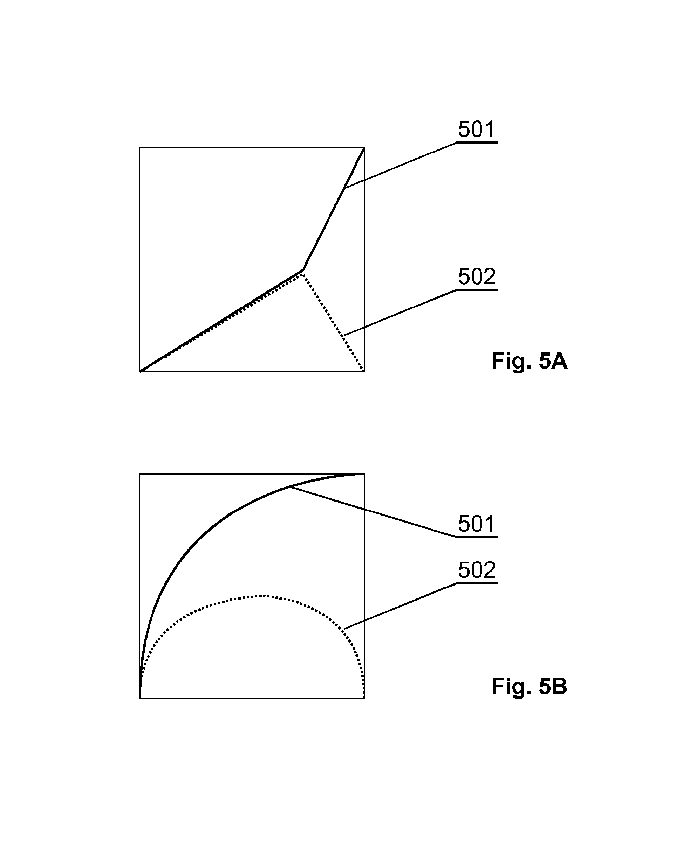

The embodiments described above rely on transforming only one of the frames of the stereo pair, e.g. the original second frame. Such transformation may result in excessive load to one of the eyes of the user, e.g. the right eye. In order to compensate for this effect, two transition frames may be produces, i.e. the transition frame as explained with reference to Figs. 1-4, and a secondary transition frame. Figs. 5A and 5B show examples of a primary transition coefficient 501 for the primary transition frame 130A-130E and a secondary transition coefficient 502 for the secondary transition frame 140A-140E. The secondary transition coefficient 502 is changing for consecutive frames and is not larger than the primary transition coefficient 501, such that the first 140A of the secondary transition frames is substantially equal to the original first frame 120A and the last 140E of the transition frames is substantially equal to the original first frame 110E.

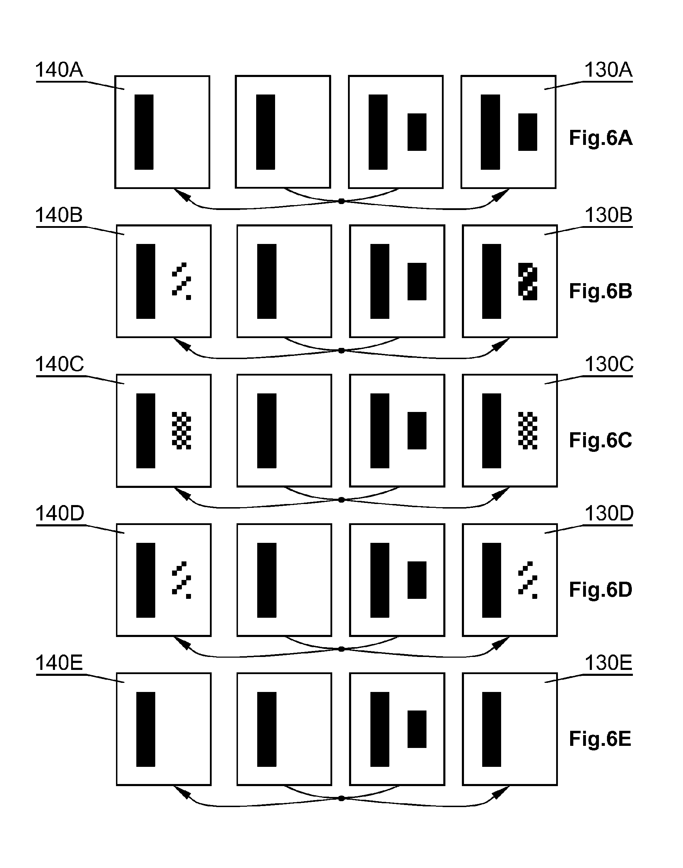

Figs. 6A-6F shows exemplary transition frames 140A-140E in a way equivalent to Figs. 1A-1F.

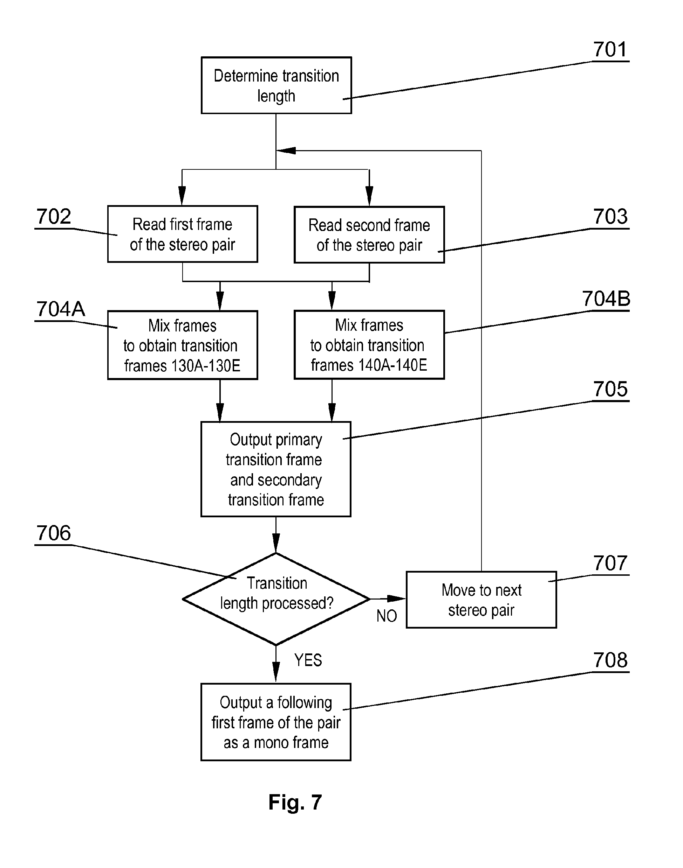

Fig. 7 shows the method utilizing a primary and secondary transition coefficient. Steps 701-703, 706-708 are equivalent to steps 201-203, 206-208 of the method according to Fig. 2. In step 704A the original first and second frames are mixed using a primary transition function with the primary transition coefficient 501 to obtain a primary transition frame. In step 704B the original first and second frames are mixed using a secondary transition function with the secondary transition coefficient 501 to obtain a secondary transition frame. In step 705, the primary transition frames 130A-130E and secondary transition frames 140A-140E are output as a transition 3D signal.

For the method presented in Fig. 7, the transition functions can be defined as follows:

$$\begin{cases} \tilde{R}_\iota = \alpha_i L_i + (1 - \alpha_i)R_i, \\ \tilde{L}_\iota = \beta_i R_i + (1 - \beta_i)L_i, \end{cases}$$

wherein $\alpha_i$ and $\beta_l$, are respectively the primary and secondary transition functions.

In turn, the attractor-based transition function can be defined as:

$$\begin{cases} \tilde{R}_\theta(i,j) = R_\theta(i, j + \delta(p)), \\ \tilde{L}_\theta(i,j) = L_\theta(i, j + \Delta(q)), \end{cases}$$

$$\begin{cases} p = arg\min_{\delta}(D(L_\theta(i,j), R_\theta(i, j + \delta))), \\ q = arg\min_{\Delta}(D(R_\theta(i,j), L_\theta(i, j + \Delta))), \end{cases}$$

$$\begin{cases} \delta = 0, -1, 1, -2, 2, \dots, -\theta, \theta, \\ \Delta = 0, -1, 1, -2, 2, \dots, -\mu(\theta), \mu(\theta), \end{cases}$$

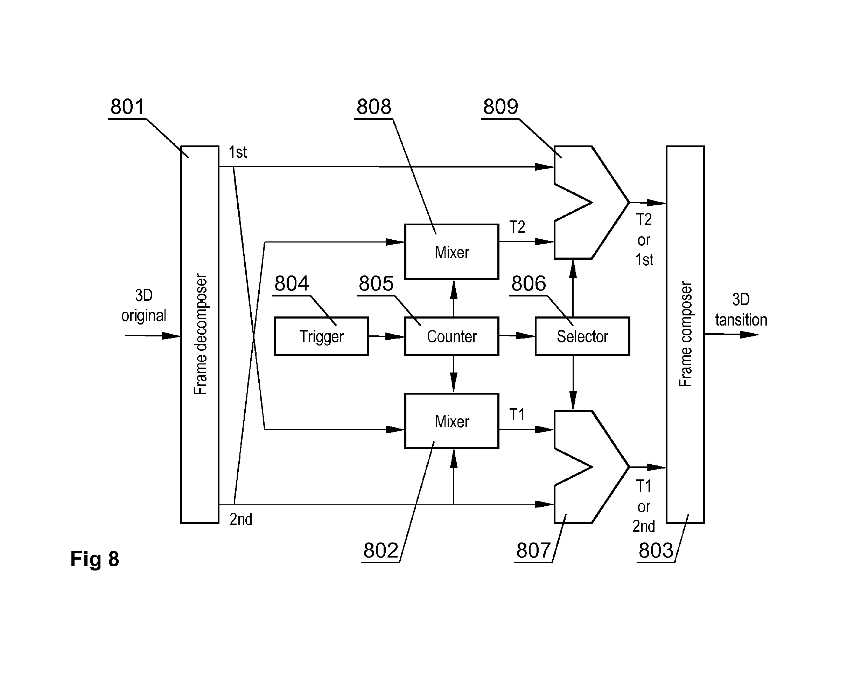

Fig. 8 shows the structure of a second embodiment of a system according to the invention. Modules 801-807 are equivalent to modules 401-407 shown in Fig. 4. In addition, a secondary mixer is used to mix the original first frame 110A-110E and the original second frame 120A-120E using a secondary transition function to obtain a secondary transition frame T2. The switch 809 operates in a way equivalent to the switch 807. Therefore, for the counter value of zero, the switches 807, 809 are set to provide the original first frame 110A-110E and the original second frame 120A-120E to the frame composer 803. For the counter value above 0, the switches 807, 809 are set to provide the primary transition frame 130A-130E and the secondary transition frame 140A-140E to the frame composer 803. For the counter value of N, the primary transition frame 130A-130E and the secondary transition frame 140A-140E are equal to the original first frame 110A-110E.

It can be easily recognized, by one skilled in the art, that the aforementioned system and method for transforming a 3D video sequence to a 2D video sequence may be performed and/or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

**Claims**

1. A method for transforming a 3D video sequence comprising pairs of original stereo frames (110, 120) to a 2D video sequence comprising mono frames (150), the method comprising the steps of:

   - determining a number of transition frames,
   - for each consecutive transition frame,

     o mixing an original first frame (110A-110E) of the stereo pair with an original second frame (120A-120E) of the stereo pair using a transition function to obtain a transition frame (130A-130E),
     o wherein the transition function is based on a transition coefficient changing for consecutive frames, such that the first (130A) of the transition frames is substantially equal to the original second frame (120A) and the last (130E) of the transition frames is substantially equal to the original first frame (110E),
     o providing the original first frame (110A-110E) and the transition frame (130A-130E) as a transition stereo pair.

2. The method according to any of previous claims, wherein the transition function defines a summation of the left frame multiplied by a first transition coefficient and of the right frame multiplied by a second transition coefficient, wherein the sum of the first and second transition coefficient is constant for consecutive transition frames.

3. The method according to claim 3, wherein the first and second transition coefficients change in a non-linear fashion for consecutive transition frames.

4. The method according to claim 1, wherein the transition function is an attractor function configured to output, for each pixel of the frame, a transition pixel equal to a pixel of a second frame which is most similar to a pixel of the first frame within a range equal to the transition coefficient.

5. The method according to any of previous claims, wherein the number of transition frames defines a transition length of between 0,3 second and 2 seconds.

6. A method according to any of previous claims, further comprising the steps of:

   - for each consecutive transition frame,

     o mixing the original first frame (110A-110E) of the stereo pair with the original second frame (120A-120E) of the stereo pair using a secondary transition function to obtain a secondary transition frame (140A-140E),

o wherein the transition function is based on a secondary transition coefficient (502) changing for consecutive frames and not larger than the transition coefficient (501), such that the first (140A) of the secondary transition frames is substantially equal to the original first frame (120A) and the last (140E) of the transition frames is substantially equal to the original first frame (110E),

o providing the secondary transition frame (140A-140E) and the transition frame (130A-130E) as the transition stereo pair.

7. The method according to any of previous claims, further comprising the steps of:

- determining a number of re-transition frames,
- for each consecutive re-transition frame,

o mixing an original first frame (110G-110K) of the stereo pair with an original second frame (120G-120K) of the stereo pair using a re-transition function to obtain a re-transition frame (130G-130K),

o wherein the re-transition function is based on a re-transition coefficient changing for consecutive frames, such that the first (130G) of the re-transition frames is substantially equal to the original first frame (120G) and the last (130K) of the re-transition frames is substantially equal to the original second frame (110K),

o providing the original first frame (110G-110K) and the re-transition frame (130G-130K) as a re-transition stereo pair.

8. A computer program comprising program code means for performing all the steps of the method according to any of claims 1-7 when said program is run on a computer.

9. A computer readable medium storing computer-executable instructions performing all the steps of the method according to any of claims 1-7 when executed on a computer.

10. A system for transforming a 3D video sequence comprising pairs of original stereo frames (110, 120) to a 2D video sequence comprising mono frames (150), the system comprising:

- a frame decomposer (301, 801) configured to receive the 3D video sequence and decompose it into an original first frame (110A-110E) and original second frame (120A-120E),
- a counter (305, 805) configured to count a number of transition frames,
- a mixer (302, 802) configured to, for each consecutive transition frame,

o mix the original first frame (110A-110E) with the original second frame (120A-120E) using a transition function to obtain a transition frame (130A-130E),

o wherein the transition function is based on a transition coefficient changing for consecutive frames, such that the first (130A) of the transition frames is substantially equal to the original second frame (120A) and the last (130E) of the transition frames is substantially equal to the original first frame (110E),

- a frame composer (303, 803) configured to provide the original first frame (110A-110E) and the transition frame (130A-130E) as a transition stereo pair.

11. The system according to claim 10, further comprising:

- a mixer (808), configured to, for each consecutive transition frame,

o mix the original first frame (110A-110E) of the stereo pair with the original second frame (120A-120E) of the stereo pair using a secondary transition function to obtain a secondary transition frame (140A-140E),

o wherein the transition function is based on a secondary transition coefficient (502) changing for consecutive frames and not larger than the transition coefficient (501), such that the first (140A) of the secondary transition frames is substantially equal to the original first frame (120A) and the last (140E) of the transition frames is substantially equal to the original first frame (110E),

- wherein the frame composer (803) is configured to provide the secondary transition frame (140A-140E) and the transition frame (130A-130E) as the transition stereo pair.

Fig. 1A

Fig. 1B

Fig. 1C

Fig. 1D

Fig. 1E

Fig. 1F

Fig. 1G

Fig. 1H

Fig. 1I

Fig. 1J

Fig. 1K

**Fig. 2**

Fig. 3A

Fig. 3B

Fig. 3C

Fig. 4

501

502

**Fig. 5A**

501

502

**Fig. 5B**

140A

130A

**Fig.6A**

140B

130B

**Fig.6B**

140C

130C

**Fig.6C**

140D

130D

**Fig.6D**

140E

130E

**Fig.6E**

701

Determine transition
length

702 Read first frame
of the stereo pair

Read second frame
of the stereo pair 703

704A Mix frames
to obtain transition
frames 130A-130E

Mix frames
to obtain transition
frames 140A-140E 704B

Output primary
transition frame
and secondary
transition frame 705

706 Transition
length processed?

NO

Move to next
stereo pair 707

YES

Output a following
first frame of the pair
as a mono frame 708

**Fig. 7**

**Fig 8**

EP 2 464 126 A1

Europäisches
Patentamt
European
Patent Office
Office européen
des brevets

**EUROPEAN SEARCH REPORT**

Application Number

EP 10 19 4636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 628 490 A1 (SANYO ELECTRIC CO [JP]) 22 February 2006 (2006-02-22) * paragraph [0249] - paragraph [0250] * * paragraph [0252] * * paragraph [0253] * * figure 32 * | 1-11 | INV. H04N13/00 |
| A | WO 2009/077929 A1 (KONINKL PHILIPS ELECTRONICS NV [NL]; NEWTON PHILIP S [NL]; MOLL HENDRI) 25 June 2009 (2009-06-25) * page 1, line 27 - line 29 * * page 2, line 27 - page 3, line 11 * | 1-11 | |
| A | JP 2005 229560 A (ITO HIROBUMI) 25 August 2005 (2005-08-25) * paragraph [0056] - paragraph [0057] * * abstract * | 1-11 | |

TECHNICAL FIELDS
SEARCHED (IPC)

H04N

The present search report has been drawn up for all claims

| Place of search | Date of completion of the search | Examiner |
|---|---|---|
| The Hague | 26 April 2011 | Mikulastik, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**ANNEX TO THE EUROPEAN SEARCH REPORT
ON EUROPEAN PATENT APPLICATION NO.**

EP 10 19 4636

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2011

| Patent document cited in search report | | Publication date | Patent family member(s) | | Publication date |
|---|---|---|---|---|---|
| EP 1628490 | A1 | 22-02-2006 | WO | 2004107764 A1 | 09-12-2004 |
|  |  |  | US | 2007236493 A1 | 11-10-2007 |
| WO 2009077929 | A1 | 25-06-2009 | CN | 101897195 A | 24-11-2010 |
|  |  |  | EP | 2232885 A1 | 29-09-2010 |
|  |  |  | KR | 20100102153 A | 20-09-2010 |
|  |  |  | US | 2010303442 A1 | 02-12-2010 |
| JP 2005229560 | A | 25-08-2005 | JP | 4320271 B2 | 26-08-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5796373 A